# FASCICULE DE BREVET EUROPEEN

(11) **EP 1 600 880 B1**
(45) Date de publication et mention de la délivrance du brevet: **12.11.2008**
(21) Numéro de dépôt: 05291057.7
(22) Date de dépôt: 17.05.2005
(51) Int. Cl.: G06K 7/00

(54) **Procédé de lecture du plan mémoire d'un support de données sans contact**
Verfahren zum Lesen eines Speichers in einem kontaktlosen Datenträger
Method of reading a memory in a contactless data carrier

(30) Priorité: 18.05.2004 FR 0405426
(43) Date de publication de la demande: 30.11.2005
(73) Titulaire: STMicroelectronics S.A., 92120 Montrouge (FR)
(72) Inventeur: Moreaux, Christophe, 13109 Simiane (FR); Rizzo, Pierre, 13100 Aix-en-Provence (FR)
(74) Mandataire: Verdure, Stéphane

(56) Documents cités:
- EP-A- 1 001 360
- "International Standard ISO/IEC 15693-3 Identification cards - Contactless integrated circuit(s) cards - Vicinity cards- Part 3: Anticollision and transmission protocol" ISO/IEC 15693-3, XX, XX, 1 avril 2001 (2001-04-01), pages 1-49, XP002269867

## Description

La présente invention concerne de manière générale la lecture de données dans une mémoire d'une étiquette sans contact de type RFID (de l'anglais « Radio Frequency IDentification »). Plus particulièrement, elle propose une commande permettant une lecture accélérée, totale ou partielle, du contenu de la mémoire.

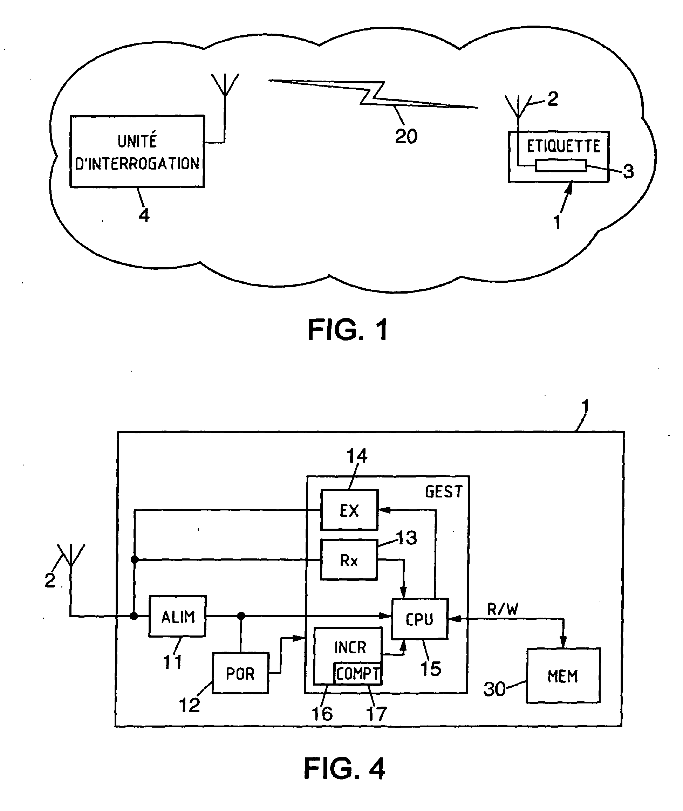

Les étiquettes RFID, ou étiquettes sans contact, sont de plus en plus utilisées dans la vie courante, notamment pour la traçabilité d'une gamme de produits, ou de produits individuellement. Un exemple d'étiquette RFID est présenté à la figure 1. Sans source d'énergie propre, elle comporte une antenne 2 et un circuit électronique 3 incluant une mémoire dans laquelle peuvent être stockées différentes informations propres à l'utilisation de l'étiquette, par exemple un code d'identification ou (Identifiant) de l'étiquette notamment. Une étiquette RFID est un émetteur/récepteur télé alimenté par un champ radio produit par une unité d'interrogation distante 4. L'étiquette émet les informations stockées, en partie ou totalement, en réponse à un message d'interrogation contenu dans un signal radio 20 reçu de l'unité d'interrogation 4. Les échanges sont réalisés sous forme de trames contenant des séquences de bits.

Le document EP-A-1 001 360 divulgue une solution pour la lecture dans la mémoire d'une carte à puce prévoyant une commande pour l'incrémentation d'un compteur d'adresse et une commande pour la lecture et la transmission de données.

La mémoire servant à stocker l'Identifiant de l'étiquette peut être une mémoire, par exemple, de type OTP (de l'anglais « One Time Programmable » ou de type EEPROM (de l'anglais « Electrically Erasable Programmable Read Only Memory »). Elle peut présenter aujourd'hui des tailles supérieures à 64 bits, voire atteindre des tailles de quelques dizaines de kiloblts (par exemple 64 kbits).

Une telle mémoire est typiquement organisée en mots mémoires, également appelés blocs, l'ensemble de ces mots formant le plan mémoire. Un mot mémoire est constitué d'un certain nombre de cellules mémoires adjacentes, stockant chacune un bit, et placées sur une même ligne du plan mémoire. Chaque bloc est identifiable par sa position, appelée adresse, dans le plan mémoire.

Une mémoire peut être par ailleurs organisée en plusieurs zones mémoires, regroupant chacune un ou plusieurs blocs, Une première zone est réservée pour stocker l'identifiant de l'étiquette, et est appelée zone UID (« User IDentification » en anglais). Une ou plusieurs autres zones mémoires peuvent être présentes également, et sont alors disponibles pour un autre usage à définir par l'utilisateur. On appelle zone USER une telle zone mémoire. Chacun des blocs dans la zone UID comme dans la zone USER sont distinguables par leur adresse dans la mémoire.

Des commandes d'accès à l'intégralité ou à une partie du plan mémoire (appelé « memory dump » en anglais), à partir de l'adresse d'un mot mémoire déterminé sont connues de la norme en vigueur ISO/IEC FCD 15693, comme la commande optionnelle « read multi block » dont les paramètres incluent l'adresse de départ de la lecture, et le nombre de blocs à lire.

Selon la norme ISO/IEC 13239 en vigueur, l'étiquette sans contact accompagne chaque bloc ou groupe de blocs transmis dans une trame par un code de contrôle par redondance cyclique ou CRC (de l'anglais « Cyclic Redundancy Check »), qui est fonction des données du ou des blocs transmises dans la trame, et codé sur 16 bits. Le rôle du CRC est de permettre à l'unité d'interrogation distante de vérifier s'il n'y a pas eu d'erreur de transmission pour la trame. L'unité d'interrogation distante vérifie en effet si la valeur du ou des blocs reçus est correcte, c'est-à-dire conforme à la valeur du CRC reçu. Dans la négative, l'unité d'interrogation distante ne tient pas compte de la trame reçue, qui devra éventuellement être émise à nouveau.

Il en va de même pour la commande « read multi block » qui entraîne la transmission d'un certain nombre de blocs du plan mémoire dans une seule trame, et protégée par un seul CRC. Or, plus la taille du plan mémoire est grande, plus le risque d'erreur de transmission est grand. En cas d'erreur de transmission sur la trame, c'est toute la trame qui doit être retransmise. Il s'ensuit que la commande « read multi block » n'est pas adaptée à la lecture d'un plan mémoire de grande taille.

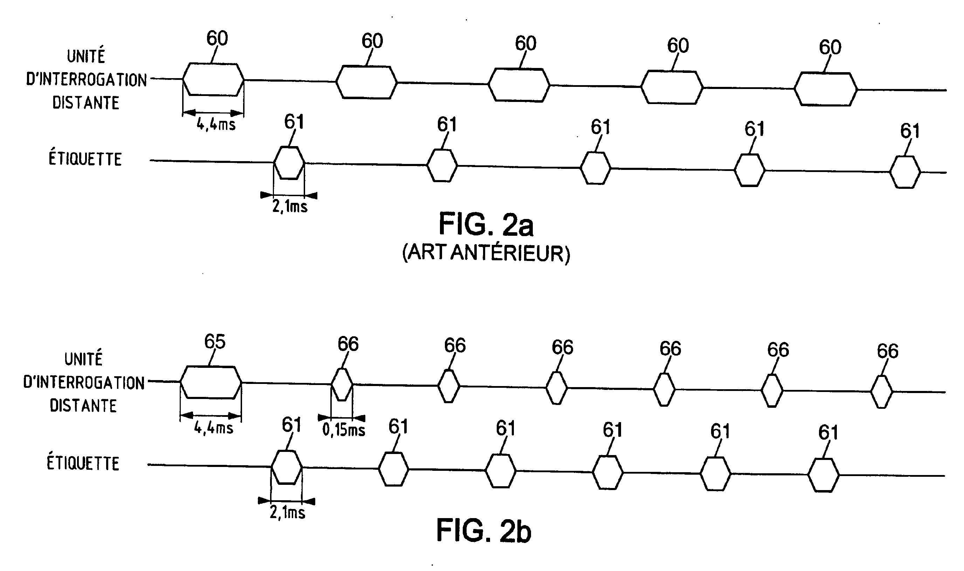

Un protocole de lecture séquentielle par des commandes successives de lecture d'un mot mémoire, à partir de l'adresse d'un mot mémoire déterminé, est également connu, et est représenté schématiquement à la figure 2a. Il nécessite cependant l'émission 60 par l'unité d'interrogation distante d'une commande de lecture d'un bloc (COM_ADRES) après chaque réception 61 d'un bloc émis par l'étiquette sans contact. Compte tenu des tailles de mémoire envisagées aujourd'hui pour les étiquettes sans contact, cette lecture séquentielle (bloc par bloc) peut entraîner un temps de lecture de tout le plan mémoire qui est très long. En effet, pour une étiquette sans contact comprenant une mémoire composée de 2048 blocs, de 32 bits chacun (soit 64 kbits au total) et communiquant selon le protocole ISO/IEC 15693, la vitesse maximale de transfert en émission et en réception est de 26,48 kbit/s.

La lecture du plan mémoire comprend alors les étapes suivantes, avec leur durée respective calculée à partir de la vitesse maximale de transfert mentionnée précédemment :
1. émission par l'unité d'interrogation distante de la commande de lecture d'un bloc COM_ADRES (codée sur 116 bits selon la norme) 4.4 ms
2. temps d'attente avant la réponse de l'étiquette sans contact 0.3 ms
3. émission par l'étiquette sans contact d'un bloc et du CRC correspondant (codée sur 56 bits selon la norme, dont 16 pour le CRC) 2.1 ms
4. temps d'attente avant l'émission par l'unité d'interrogation distante d'une nouvelle commande de lecture 0.3 ms

Cette séquence d'étapes est répétée 2048 fois pour la lecture de l'intégralité du plan mémoire, ce qui donne au total un temps de lecture de 14.5 secondes. C'est notamment l'émission systématique d'une commande de lecture d'un bloc COM_ADRES qui est consommatrice de temps. Les durées sont données à titre indicatif et sont calculées sur la base de la vitesse maximale de transfert selon la norme ISO/EIC 15693. D'autres vitesses sont possibles, notamment selon la norme ISO/EIC 14443, comme des vitesses de 106 kbits/s, de 212 kbits/s ou 424 kbits/s. Dans la suite de l'exposé, on gardera la vitesse maximale de 26.48 kbits/s selon la norme ISO/EIC 15693 pour toutes les durées mentionnées.

Un objet de la présente invention est de proposer un protocole de lecture pour accélérer la lecture totale ou partielle du plan mémoire (en anglais memory dump) sans augmenter le risque de transmission.

A cet effet, l'invention propose un procédé de lecture d'un groupe de mots mémoires dans une mémoire en circuit intégré d'une étiquette sans contact, selon la revendication 1.

Ainsi la commande de lecture n'est émise qu'une seule fois, et est remplacée pour la lecture des mots mémoires suivants par l'émission d'un marqueur d'incrémentation. Un tel marqueur peut en pratique être limité à un nombre réduit de bits, par exemple quatre. Sa transmission à 26.48 kbits/s dure environ 0.15 ms, ce qui est sensiblement moins que la durée de transmission d'un message de lecture d'un bloc. Néanmoins, le protocole de lecture reste un protocole de lecture bloc par bloc, limitant ainsi la taille des transmissions, et donc les risques d'erreur de transmission attachés.

Dans un autre mode de réalisation avantageux, la trame de données émise par l'étiquette sans contact vers l'unité d'interrogation distante comprend un code de contrôle par redondance cyclique qui est fonction du mot mémoire.

Dans un mode de réalisation avantageux, l'unité d'interrogation distante est adaptée pour vérifier l'intégrité du mot mémoire reçu de l'étiquette sans contact à l'aide du code de contrôle et émettre un marqueur d'incrémentation en cas d'intégrité, ou émettre un marqueur d'erreur de transmission reconnaissable par l'étiquette sans contact et distinct du marqueur d'incrémentation dans le cas contraire. Cela permet à l'étiquette sans contact, en vertu d'un protocole prévu à cet effet, de retransmettre le mot mémoire qui n'a pas été correctement reçu par l'unité d'interrogation.

Par ailleurs, le compteur d'adresse de l'étiquette sans contact n'est pas incrémenté lorsque l'étiquette sans contact reconnaît le marqueur d'erreur de transmission émis par l'unité d'interrogation distante. Ainsi, le compteur d'adresse reste bloqué à l'adresse courante du dernier mot mémoire émis, et ce dernier pourra à nouveau être transmis lors de l'itération suivante.

Avantageusement, le processus itératif est terminé lorsque l'unité d'interrogation distante émet une trame distincte du marqueur d'incrémentation et du marqueur d'erreur de transmission ou lorsque la valeur courante du compteur d'adresse pointe sur une valeur supérieure à la dernière adresse du groupe de mots mémoires.

Dans un mode de réalisation préféré, le marqueur d'incrémentation est un champ délimiteur de fin de trame.

Ainsi on utilise un champ connu de la norme ISO/IEC 15693 pour permettre l'incrémentation de la valeur courante du compteur d'adresse. Ceci est avantageux car les étiquettes de type connu comprennent déjà la circuiterie nécessaire au décodage de tels motifs binaires.

L'invention concerne également une étiquette sans contact selon la revendication 7.

D'autres caractéristiques et avantages de l'invention apparaîtront encore à la lecture de la description qui va suivre. Celle-ci est purement illustrative et doit être lue en regard des dessins annexés sur lesquels :
- la figure 1 est un schéma illustrant le principe de télé alimentation d'une étiquette ;
- la figure 2a est un schéma illustrant un protocole connu de lecture séquentielle du plan mémoire ;
- la figure 2b est un schéma illustrant le principe du procédé de lecture selon l'invention ;
- la figure 3 est un diagramme d'étapes d'un mode de mise en oeuvre du procédé selon l'invention ; et,
- la figure 4 est un schéma d'un exemple de réalisation d'une étiquette sans contact selon l'invention.

La figure 1 a déjà fait l'objet d'une description en introduction ci-dessus.

D'une manière générale, les commandes, également appelées requêtes, émises par l'unité d'interrogation distante, ou les réponses transmises par l'étiquette sans contact, sont codées et émises sous la forme de trames d'un certain nombre de bits. Les trames pour la transmission de commandes d'un bloc, par exemple, sont normalisées selon la norme ISO/IEC 15693. La structure de trame est du type :

| | | | | | | |
|---|---|---|---|---|---|---|
| SOF | flags | OP Code | identifiant | adresse | CRC | EOF |

où :
- <« SOF » est un champ délimiteur de début de trame qui marque le début d'une trame correspondant à une commande (« Start of File » en anglais, taille 8 bits),
- « flags » désigne les actions que doit remplir l'étiquette (taille 8 bits),
- « OP Code » désigne le code de la commande (« OPeration Code » en anglais, taille 8 bits),
- « identifiant » est l'identifiant stocké dans la zone UID de la mémoire (taille 64 bits),
- « adresse » est l'adresse du mot mémoire dans la mémoire (taille 16 bits),
- « CRC » est un code de contrôle par redondance cyclique (taille 16 bits),
- « EOF » marque la fin de la séquence correspondant à la commande (End of File en anglais, d'une taille de 4 bits).

L'identifiant est optionnel, et suppose qu'il y a eu une première communication entre l'unité d'interrogation distante et l'étiquette sans contact. Avec l'identifiant, la séquence d'une commande correspond à 116 bits. On considérera dans la suite de l'exposé qu'il est systématiquement utilisé afin de prendre en compte la durée maximale de l'émission de la commande de lecture.

Dans la norme ISO/IEC 15693, les données sont codées à partir d'une modulation de la position d'impulsions selon le mode 1 sur 4. Les bits sont regroupés par deux, et représentés par une impulsion de 2 x 9.44 µs, occupant une position différente en fonction de la paire de bits codées (00, 01, 10, ou 11) sur un intervalle de temps total de 75.52 µs.

Le protocole de lecture pour accélérer la lecture totale ou partielle du plan mémoire selon l'invention, représenté schématiquement à la figure 2b, innove par le fait que l'émission d'une commande de lecture spécifique 65 est suivie par l'émission par l'unité d'interrogation distante d'un marqueur d'incrémentation 66 reconnaissable par l'étiquette, lequel marqueur provoque l'émission par l'étiquette sans contact du bloc 61 contenu à l'adresse suivante. Il n'est donc plus nécessaire d'émettre une commande de lecture d'un bloc pour la lecture successive de chaque bloc, ce qui nécessite un temps important compte tenu de la longueur de la trame la codant (116 bits).

Ainsi le protocole de lecture est un processus séquentiel itératif, comportant les étapes suivantes, avec leur durée respective calculée à partir de la vitesse minimale de transfert :
1. émission par l'unité d'interrogation distante d'une commande spécifique de lecture d'un groupe de blocs à partir d'une adresse donnée ADRESSE_START 4.4 ms
2. temps d'attente pendant lequel un compteur d'adresse de l'étiquette sans contact est initialisé à la valeur de ladite adresse donnée ADRESSE_START 0.3 ms
3. émission par l'étiquette sans contact d'une trame de réponse comprenant un bloc et un CRC correspondant 2.1 ms
4. temps d'attente 0.3 ms
5. émission par l'unité d'interrogation distante d'un marqueur d'incrémentation MARQ_INCR. 0.15 ms

La cinquième étape étant alors suivie d'un retour à la deuxième étape au cours de laquelle l'initialisation du compteur d'adresse est remplacée par une incrémentation de ce même compteur.

La première étape est la transmission par l'unité d'interrogation distante de la commande spécifique de lecture, qui permet la mise en oeuvre du protocole de transfert par l'étiquette. La norme prévoit un certain nombre de commandes types, et offre la possibilité aux fabricants de définir d'autres commandes, par le biais d'un code opérateur disponible (du type « Ai », réservé pour le fabricant). Le protocole de lecture selon l'invention peut donc être mis en oeuvre par le biais d'une commande spécifique, appelée COM_SPEC dans la suite de l'exposé, et choisie parmi les commandes réservées au fabricant.

La commande spécifique de lecture COM_SPEC ainsi que la commande de lecture d'un bloc COM_ADRES sont codées de la même façon sur 116 bits et nécessitent donc le même temps de transmission. La commande COM_SPEC n'est utilisée qu'une seule fois dans le protocole selon l'invention.

Les étapes 2 à 4 sont comparables à celle du protocole de lecture séquentielle connu qui a été décrit en introduction. Cependant, l'étape 2, qui correspond au temps nécessaire à l'étiquette sans contact pour décoder la commande reçue et accéder au bloc de la mémoire correspondant à l'adresse donnée, comporte une étape supplémentaire par rapport au protocole connue et qui consiste à initialiser un compteur d'adresse COMPT à la valeur de l'adresse ADRESSE_START contenue dans la commande spécifique COM_SPEC. Le temps d'attente correspondant à cette deuxième étape est identique à celui de la même étape du protocole de lecture séquentielle connu. Ce temps d'attente est prévu pour permettre le retournement des moyens d'émission/réception de l'étiquette et de l'unité d'interrogation distante. L'adresse donnée ADRESSE_START est un paramètre de la commande spécifique de lecture émise par l'unité d'interrogation distante

Lors de la troisième étape, l'étiquette sans contact émet vers l'unité d'interrogation distante une trame contenant le mot mémoire stocké à l'adresse pointée par la valeur courante du compteur d'adresse COMPT, donc initialement à la valeur ADRESSE_START. La trame transmise comprend également un code de contrôle par redondance cyclique (CRC). Ce CRC est fonction, comme expliqué en introduction, de la valeur des bits du mot mémoire transmis. Contrairement à la commande « multi read block » connue (selon laquelle un certain nombre de mots mémoires du plan mémoire sont transmis intégralement dans une seule et même trame), la trame de bits transmise ici reste une trame courte, ce qui limite le risque d'erreur de transmission. Le temps de réponse de l'étiquette sans contact dans cette troisième étape est identique à celui de la même étape du protocole de lecture séquentielle connu.

Lors de la quatrième étape, l'unité d'interrogation distante prend en compte le contenu de la transmission de l'étiquette sans contact, et procède notamment à la vérification du CRC reçu avec le bloc. A cet effet, l'unité d'interrogation distante est adaptée pour vérifier si le code de contrôle et le bloc émis par l'étiquette sans contact se correspondent.

Lors de la cinquième étape, l'unité d'interrogation distante émet un marqueur d'incrémentation MARQ_INCR reconnaissable par l'étiquette sans contact. Dans un mode de réalisation préféré, l'unité d'interrogation distante est adaptée pour vérifier l'intégrité du bloc reçu de l'étiquette sans contact à l'étape précédente, à l'aide du CRC. Le résultat de cette vérification conditionne l'émission du marqueur. En effet si la vérification s'avère positive, c'est-à-dire qu'il n'y a pas eu d'erreur de transmission à la troisième étape, le marqueur d'incrémentation reconnaissable par l'étiquette MARQ_INCR est émis par l'unité d'interrogation distante et permet l'incrémentation du compteur d'adresse de manière à ce qu'il pointe l'adresse du bloc suivant dans le plan mémoire. Dans le cas contraire, l'unité d'interrogation distante émet un marqueur d'erreur de transmission MARQ_ERREUR, distinct du marqueur d'incrémentation, et qui n'autorise pas l'incrémentation du compteur d'adresse. Ainsi bloqué à la valeur courante, le même bloc pourra à nouveau être transmis lors d'une itération suivante.

Dans un mode de réalisation préféré, le marqueur d'incrémentation MARQ_INCR est codé sur 4 bits, et est par exemple un champ délimiteur de fin de trame (« End of Frame » en anglais). Ce champ est de petite taille. La logique de codage ou de décodage est déjà disponible puisque ce champ est systématiquement utilisé lors de la transmission ou de l'émission d'une trame de commande selon la norme. La transmission d'un champ délimiteur de fin de trame est d'une durée de 0.15 ms pour la vitesse minimale de 26.48 kbits/s. Le marqueur d'erreur de transmission MARQ_ERREUR est avantageusement codé sur 4 bits, avec un codage distinct de celui du champ délimiteur de fin de trame.

A la suite de la cinquième étape, si la lecture du plan mémoire n'est pas terminée, le protocole de lecture reprend à la deuxième étape. Cette nouvelle deuxième étape diffère de la deuxième étape du protocole selon l'invention décrite auparavant, l'initialisation du compteur d'adresse étant remplacée par une incrémentation de ce dernier. L'étiquette sans contact est en effet adaptée pour que, lors d'un premier passage par la deuxième étape du processus itératif, le compteur d'adresse soit initialisé à la valeur de l'adresse donnée ADRESSE_START, et pour que lors de tous les autres passages successifs, le compteur d'adresse soit incrémenté si l'unité d'interrogation distante a émis le marqueur d'incrémentation, ou garde sa valeur courante, si l'unité d'interrogation distante a émis le marqueur d'erreur de transmission. Dans tous les cas de figure, cette deuxième étape a une durée de 0.3 ms.

Dans la norme prise en exemple (ISO/IEC 15693), il existe une notion de code d'erreur CODE_ERR, qu'émet l'étiquette sans contact si par exemple l'unité d'interrogation distante émet une commande de lecture d'un bloc avec une adresse hors du plan mémoire. Dans le protocole de lecture selon l'invention, ce cas de figure se présente lorsque l'unité d'interrogation distante émet le marqueur d'incrémentation à la suite de l'émission réussie du dernier bloc par l'étiquette sans contact. En effet, lorsque le dernier bloc du plan mémoire est émis par l'étiquette, la valeur courante du compteur pointe alors sur la dernière adresse du plan mémoire. L'émission de la trame d'incrémentation par l'unité d'interrogation distante, après vérification positive de l'intégrité de la dernière trame reçue, entraîne une nouvelle incrémentation du compteur d'adresse qui pointe alors sur une valeur d'adresse hors du plan mémoire. L'étiquette émet alors le code CODE_ERR. L'unité d'interrogation distante est alors adaptée pour arrêter l'émission des trames d'incrémentation après réception du code CODE_ERR.

Dans un autre mode de réalisation, on peut envisager que le processus itératif est terminé lorsque l'unité d'interrogation distante transmet une trame différente du marqueur d'incrémentation ou du marqueur d'erreur de transmission. C'est le cas notamment lorsque l'unité transmet une nouvelle commande de lecture ou d'écriture. Le protocole de transfert est alors terminé.

Pour une utilisation du protocole de transfert selon l'invention sur l'intégralité du plan mémoire d'une mémoire de 2048 blocs, comme pour l'exemple précédent, il faut alors compter un temps total de transfert de 5.8 secondes. Soit environ 2.5 fois plus rapide qu'avec le protocole connu de lecture séquentielle.

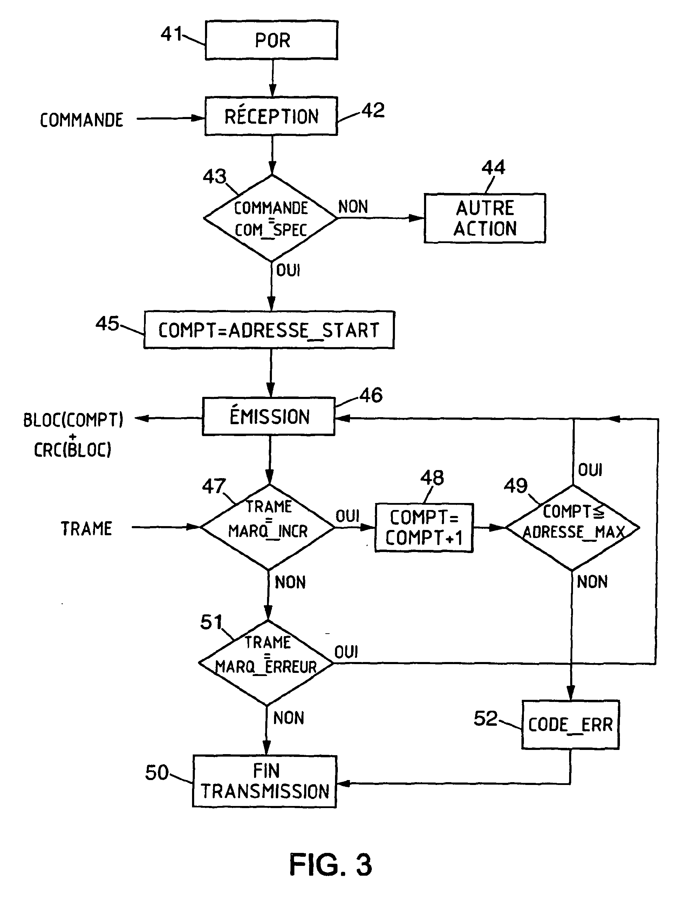

La figure 3 est un diagramme d'étape illustrant un exemple de mise en oeuvre du protocole de lecture selon l'invention. Ce protocole peut être implémenté dans un module de GEST gérant les différents modules de l'étiquette sans contact, comme illustré à la figure 4 et décrit ultérieurement. L'étiquette, lors de son entrée progressive dans le champ radio de l'unité d'interrogation, doit d'abord être suffisamment alimentée par télé alimentation avant que l'exécution de toute opération soit autorisée. Le contrôle 41 de cette condition est réalisé par le dispositif POR (de l'anglais « Power On Reset ») de la figure 3, disposé en amont du circuit électronique de l'étiquette. Un tel dispositif est actif tant que l'alimentation de l'étiquette n'est pas suffisante pour assurer le fonctionnement de tous les composants de l'étiquette.

Dans une étape 42, mise en oeuvre par exemple dès que le dispositif POR devient inactif c'est-à-dire une fois que le niveau de tension d'alimentation est suffisant, l'étiquette reçoit une trame de bits émise par l'unité d'interrogation distante, et correspondant à une commande accompagnée de différents paramètres. Lors d'une étape 43, le module de gestion GEST vérifie si la commande reçue est la commande spécifique COM_SPEC permettant le transfert des mots mémoires du plan mémoire à partir d'une adresse donnée ADRESSE_START, transmise en paramètre de ladite commande spécifique. Dans la négative, le module de gestion entreprend une autre action, correspondant à la commande reçue, lors d'une étape 44.

Si la commande reçue est la commande COM_SPEC, le module de gestion extrait l'adresse donnée ADRESSE_START codée dans la trame émise par l'unité d'interrogation distante et initialise lors d'une étape 45 un compteur d'adresse COMPT à cette valeur ADRESSE_START. Lors d'une étape 46 suivante, l'étiquette sans contact émet par l'intermédiaire du module d'émission une trame contenant notamment le bloc correspondant à la valeur courante du marqueur d'incrémentation, ainsi que le code de contrôle par redondance cyclique CRC qui est fonction du contenu de ce bloc.

Après un temps d'attente correspondant à la réception par l'unité d'interrogation distante et notamment la vérification de la transmission par le biais du CRC, l'étiquette reçoit une trame de bits émise par l'unité d'interrogation distante. Plusieurs cas de figures peuvent alors se présenter. Lors d'une étape 47, le module de gestion vérifie si la trame reçue TRAME correspond au marqueur d'incrémentation MARQ_INCR, par exemple un champ délimiteur de fin de trame (EOF). Dans l'affirmative, il incrémente la valeur du compteur d'adresse COMPT d'une unité à l'étape 48. Si le dernier bloc émis n'était pas le dernier bloc du plan mémoire, ce qui est vérifié par exemple lors d'une étape 49 en vérifiant si la nouvelle valeur courante du compteur d'adresse est toujours comprise dans le plan mémoire (COMPT ≤ ADRESSE_MAX, la valeur maximale des adresses du plan mémoire), l'étape 49 est suivie d'un retour à l'étape 46 pour transmettre le bloc contenu dans le plan mémoire à l'adresse correspondant à la nouvelle valeur courante du compteur d'adresse. Si la nouvelle valeur courante du compteur est supérieure à la valeur maximale ADRESSE_MAX, l'étiquette sans contact émet un code d'erreur CODE_ERR comme vu précédemment, et l'unité d'interrogation distante met fin lors d'une étape 50 au protocole de lecture selon l'invention.

Lors d'une étape 51, le module de gestion vérifie si la trame reçue correspond au marqueur d'erreur de transmission MARQ_ERREUR, émis par l'unité d'interrogation distante lorsqu'une erreur de transmission est survenue (c'est-à-dire que le bloc et le CRC reçus ne se correspondent pas). Dans l'affirmative, le dernier bloc émis doit être émis à nouveau, et le module de gestion retourne à l'étape 46 de transmission avec une valeur inchangée du compteur d'incrémentation.

Si la trame reçue TRAME est différente du marqueur d'incrémentation ou du marqueur d'erreur de transmission, et contient par exemple une nouvelle commande émise par l'unité d'interrogation distante, le module de gestion met fin à la lecture séquentielle lors de l'étape 50.

La figure 4 montre un exemple de circuit électronique contenu dans l'étiquette 1 sans contact. Le circuit électronique 3 de la figure 1 est couplé à l'antenne 2 pour la réception du signal radio 20 en provenance de l'unité d'interrogation, et pouvant comprendre un signal d'interrogation par exemple. Un module d'alimentation 11 est destiné à l'extraction de la tension continue d'alimentation du circuit à partir du signal radio. Un dispositif de neutralisation 12, ou dispositif POR (de l'anglais « Power on Reset ») permet de maintenir le circuit électronique à l'état inactif (non alimenté) tant que la tension d'alimentation n'a pas atteint un niveau seuil suffisant pour assurer l'intégralité des fonctions du circuit électronique. Un module de réception 13 est chargé d'extraire un message d'interrogation ou tout autre commande du signal radio lorsque l'unité d'interrogation émet une trame de bits. Un module d'émission 14 est quant à lui chargé de l'émission d'un message de réponse de l'étiquette à un message d'interrogation. Un processeur ou plus simplement un circuit de contrôle 15 en logique câblée remplit la fonction d'unité centrale de traitement (CPU) de l'étiquette et gère notamment la mémoire 30 en écriture et en lecture. Un module supplémentaire d'incrémentation 16 (INCR) permet les étapes d'initialisation et d'incrémentation d'un compteur d'adresse 17 (COMPT). Ce module peut être compris dans le processeur CPU ou distinct comme à la figure 2. II est adapté pour incrémenter le compteur d'adresse en réponse au marqueur d'incrémentation (bloc précédent transmis sans erreur), ou garder la valeur courante du compteur d'adresse, lorsque le marqueur d'erreur de transmission est reçu (erreur de transmission sur le bloc précédent).

Les modules 13 et 14, le module d'incrémentation 16, ainsi que le circuit 15 forment le module de gestion GEST mentionné précédemment.

D'une manière générale, le module de gestion GEST gère les opérations d'écriture/lecture dans la mémoire 30 de l'étiquette 1. II est également adapté pour mettre en oeuvre le protocole de lecture selon l'invention lorsque la commande de lecture spécifique COM_SPEC est émise par l'unité d'interrogation distante. Le module de gestion est en particulier adapté pour que l'étiquette sans contact émette le mot mémoire contenu à l'adresse correspondant à la valeur courante du compteur d'adresse, après que l'étiquette a reçu le marqueur d'incrémentation ou le marqueur d'erreur de transmission. C'est-à-dire qu'il est adapté pour que l'étiquette sans contact émette le contenu du bloc à l'adresse pointée par la valeur courante du compteur d'adresse, sans pour autant que l'étiquette ait reçu une commande de lecture (COM_ADRES, par exemple) dudit bloc.

A cet effet, la mémoire 30 de l'étiquette sans contact est adressable via un compteur d'adresse 17 qui est initialisé à une valeur de départ donnée à réception d'une commande de lecture spécifique et qui est incrémenté à réception d'un marqueur d'incrémentation reçu d'une unité d'interrogation distante. L'étiquette est par ailleurs agencée pour émettre vers l'unité d'interrogation distance le mot mémoire stocké dans la mémoire à l'adresse pointée par la valeur courante du compteur d'adresse dans une trame de données comprenant en outre un code de contrôle par redondance cyclique (CRC) qui est fonction du mot mémoire.

Par ailleurs, le module de gestion GEST est adapté pour que le marqueur d'incrémentation ne soit pas incrémenté à réception d'un marqueur d'erreur de transmission, distinct du marqueur d'incrémentation, qui est émis à la place du marqueur d'incrémentation par l'unité d'interrogation distante lorsque l'unité d'interrogation distante constate à l'aide du code de contrôle une erreur de transmission du mot mémoire émis par l'étiquette sans contact.

## Revendications

1. Procédé de lecture d'un groupe de mots mémoires dans une mémoire en circuit intégré (3) d'une étiquette sans contact (1), comprenant l'émission (65) par une unité d'interrogation distante (4) vers ladite étiquette sans contact d'une commande spécifique de lecture (COM_SPEC) dudit groupe de mots mémoires à partir d'une adresse de départ donnée (ADRESSE_START), l'initialisation d'un compteur d'adresse (COMPT) de l'étiquette sans contact à la valeur de ladite adresse de départ, et l'émission (46) par l'étiquette sans contact du mot mémoire à ladite adresse de départ, ainsi qu'un processus itératif comportant successivement les étapes suivantes :
- émission (66, 46) par l'unité d'interrogation distante vers ladite étiquette sans contact d'un marqueur d'incrémentation (MARQ_INCR) reconnaissable par l'étiquette sans contact ; et, en réponse (47) audit marqueur d'incrémentation :
- incrémentation (48) dudit compteur d'adresse de l'étiquette sans contact ; et,
- émission (61, 46) par l'étiquette sans contact vers ladite unité d'interrogation distante d'une trame de données comprenant le mot mémoire stocké dans ladite mémoire à l'adresse pointée par la valeur courante du compteur d'adresse et
un code de contrôle par redondance cyclique (CRC) qui est fonction du mot mémoire.

2. Procédé de lecture selon la revendication 1, dans lequel l'unité d'interrogation distante vérifie l'intégrité du mot mémoire reçu de l'étiquette sans contact à l'aide du code de contrôle et émet un marqueur d'incrémentation en cas d'intégrité, ou émet un marqueur d'erreur de transmission (MARQ_ERREUR) reconnaissable par l'étiquette sans contact et distinct dudit marqueur d'incrémentation dans le cas contraire.

3. Procédé de lecture selon la revendication précédente, dans lequel le compteur d'adresse de l'étiquette sans contact n'est pas incrémenté en réponse (51) au marqueur d'erreur de transmission.

4. Procédé de lecture selon l'une des revendications précédentes, dans lequel le processus itératif est terminé (50) lorsque l'unité d'interrogation distante émet une trame distincte du marqueur d'incrémentation et du marqueur d'erreur de transmission ou lorsque la valeur courante du compteur d'adresse pointe sur une valeur supérieure à la dernière adresse du groupe de mots mémoires (ADRESSE_MAX).

5. Procédé de lecture selon l'une des revendications précédentes, dans lequel le marqueur d'incrémentation est un champ délimiteur de fin de trame.

6. Procédé de lecture selon l'une des revendications précédentes, dans lequel l'adresse de départ donnée est un paramètre de la commande spécifique de lecture émise par l'unité d'interrogation distante.

7. Etiquette sans contact (1) comprenant une mémoire (3) adressable via un compteur d'adresse qui est adapté pour être initialisé à une valeur de départ donnée à réception (42) d'une commande de lecture spécifique et qui est incrémenté à réception d'un marqueur d'incrémentation reçu d'une unité d'interrogation distante (4)
l'étiquette sans contact étant agencée pour émettre après l'incrémentation du compteur d'adresse vers l'unité d'interrogation distante le mot mémoire stocké dans la mémoire à l'adresse pointée par la valeur courante du compteur d'adresse dans une trame de données comprenant en outre un code de contrôle par redondance cyclique (CRC) qui est fonction dudit mot mémoire.

8. Etiquette sans contact selon la revendication 7, dans laquelle le compteur d'adresse est adapté pour ne pas être incrémenté à réception d'un marqueur d'erreur de transmission, distinct du marqueur d'incrémentation, qui est émis à la place du marqueur d'incrémentation par l'unité d'interrogation distante lorsque ladite unité d'interrogation distante constate à l'aide du code de contrôle une erreur de transmission du mot mémoire émis par l'étiquette sans contact.

9. Etiquette sans contact selon l'une des revendications 7 ou 8, dans laquelle le marqueur d'incrémentation est un champ délimiteur de fin de trame.

## Claims

1. Method of reading a group of memory words in an integrated circuit memory (3) of a contactless tag (1), comprising the emission (65) by a remote interrogation unit (4) to the said contactless tag of a specific read command (COM_SPEC) for the said group of memory words, from a given start address (ADRESSE_START), initialisation of an address counter (COMPT) of the contactless tag to the value of the said start address, and emission (46) by the contactless tag of the memory word at the said start address, as well as an iterative process comprising the following steps in succession:
- emission (66, 46) by the remote interrogation unit to the said contactless tag of an incrementation marker (MARQ_INCR) which can be recognised by the contactless tag and in response (47) to the said incrementation marker;
- incrementation (48) of the said address counter of the contactless tag; and
- emission (61, 46) by the contactless tag to the said remote interrogation unit of a data frame comprising the memory word stored in the said memory at the address indicated by the current value of the address counter, and
a cyclic redundancy check (CRC) code which is dependent on the memory word.

2. Reading method according to claim 1, wherein the remote interrogation unit checks the integrity of the memory word received from the contactless tag by means of the check code, and emits an incrementation marker in the case of integrity, or in the opposite case emits a transmission error marker (MARQ_ERREUR) which can be recognised by the contactless tag, and is distinct from the said incrementation marker.

3. Reading method according to the preceding claim, wherein the address counter of the contactless tag is not incremented in response (51) to the transmission error marker.

4. Reading method according to one of the preceding claims, wherein the iterative process is terminated (50) when the remote interrogation unit emits a frame distinct from the incrementation marker and the transmission error marker, or when the current value of the address counter indicates a value greater than the last address of the group of memory words (ADRESSE_MAX).

5. Reading method according to one of the preceding claims, wherein the incrementation marker is an end of frame delimiter field.

6. Reading method according to one of the preceding claims, wherein the start address given is a parameter of the specific read command emitted by the remote interrogation unit.

7. Contactless tag (1) comprising a memory (3) which can be addressed via an address counter which is designed to be initialised to a given start value upon receipt (42) of a specific read command, and which is incremented upon receipt of an incrementation marker received from a remote interrogation unit (4), the contactless tag being designed to emit after incrementation of the address counter to the remote interrogation unit the memory word stored in the memory at the address indicated by the current value of the address counter in a data frame which additionally comprises a cyclic redundancy check (CRC) code which is dependent on the said memory word.

8. Contactless tag according to claim 7, wherein the address counter is designed to not be incremented upon receipt of a transmission error marker distinct from the incrementation marker, which is emitted in the place of the incrementation marker by the remote interrogation unit when the said remote interrogation unit determines by means of the check code a transmission error of the memory word emitted by the contactless tag.

9. Contactless tag according to one of claims 7 or 8, wherein the incrementation marker is an end of frame delimiter field.

## Patentansprüche

1. Verfahren zum Lesen einer Gruppe von Speicherwörtern in einem als integrierte Schaltung (3) ausgeführten Speicher eines kontaktlosen Etiketts (1), aufweisend
- die von einer Fernabfrageeinheit (4) zu dem kontaktlosen Etikett hin gerichtete Übertragung (65) eines speziellen Lesebefehls (COM_SPEC) zum Lesen der Gruppe von Speicherwörtern beginnend an einer gegebenen Startadresse (ADRESSE_START),
- die Initialisierung eines Adreßzählers (COMPT) des kontaktlosen Etiketts auf den Wert der Startadresse, und
- die von dem kontaktlosen Etikett ausgehende Übertragung (46) des Speicherworts an der Startadresse,
sowie einen iterativen Prozeß, welcher der Reihe nach die folgenden Schritte aufweist:
- eine von der Fernabfrageeinheit zu dem kontaktlosen Etikett hin gerichtete Übertragung (66,46) einer von dem kontaktlosen Etikett erkennbaren Inkrementationsmarke (MARQ_INCR); und als Antwort (47) auf die Inkrementationsmarke:
- eine Inkrementierung (48) des Adreßzählers des kontaktlosen Etiketts; und
- eine von dem kontaktlosen Etikett zu der Fernabfrageeinheit hin gerichtete Übertragung (61, 46) eines Datenrahmens, der das Speicherwort aufweist, das in dem Speicher an der von dem aktuellen Wert des Adreßzählers angezeigten Adresse gespeichert ist, sowie einen auf zyklischer Redundanz (CRC) basierenden Prüfcode aufweist, der eine Funktion des Speicherworts ist.

2. Leseverfahren nach Anspruch 1, in welchem die Fernabfrageeinheit die Integrität des von dem kontaktlosen Etikett herkommend empfangenen Speicherworts mit Hilfe des Prüfcodes überprüft und im Falle der Integrität eine Inkrementationsmarke sendet oder, im entgegengesetzten Fall, eine Übertragungsfehlermarke (MARQ_ERREUR) sendet, die von dem kontaktlosen Etikett erkennbar ist und sich von der Inkrementationsmarke unterscheidet.

3. Leseverfahren nach dem vorstehenden Anspruch, in welchem als Antwort (51) auf die Übertragungsfehlermarke der Adreßzähler des kontaktlosen Etiketts nicht inkrementiert wird.

4. Leseverfahren nach einem der vorstehenden Ansprüche, in welchem der iterative Prozeß beendet wird (50), wenn die Fernabfrageeinheit einen Rahmen sendet, der sich von der Inkrementationsmarke und der Übertragungsfehlermarke unterscheidet, oder wenn der aktuelle Wert des Adreßzählers auf einen Wert zeigt, der höher ist als die letzte Adresse der Gruppe von Speicherwörtern (ADRESSE_MAX).

5. Leseverfahren nach einem der vorstehenden Ansprüche, in welchem die Inkrementationsmarke ein Rahmenende-Begrenzerfeld ist.

6. Leseverfahren nach einem der vorstehenden Ansprüche, in welchem die gegebene Startadresse ein Parameter des von der Fernabfrageeinheit ausgesandten speziellen Lesebefehls ist.

7. Kontaktloses Etikett (1) aufweisend
einen Speicher (3), der über einen Adreßzähler adressierbar ist, der geeignet ist, um beim Empfang (42) eines speziellen Lesebefehls auf einen gegebenen Startwert initialisiert zu werden, und der beim Empfang einer von einer Fernabfrageeinheit (4) herkommend empfangenen Inkrementationsmarke inkrementiert wird,
wobei das kontaktlose Etikett eingerichtet ist, um nach Inkrementation des Adreßzählers das Speicherwort, das in dem Speicher an der von dem aktuellen Wert des Adreßzählers angezeigten Adresse gespeichert ist, zu der Fernabfrageeinheit hin gerichtet in einem Datenrahmen auszusenden, der außerdem einen auf zyklischer Redundanz basierenden Prüfcode (CRC) aufweist, der eine Funktion des Speicherworts ist.

8. Kontaktloses Etikett nach Anspruch 7, in welchem der Adreßzähler eingerichtet ist, um beim Empfang einer sich von der Inkrementationsmarke unterscheidenden Übertragungsfehlermarke nicht inkrementiert zu werden, die von der Fernabfrageeinheit anstelle der Inkrementationsmarke ausgesandt wird, wenn die Fernabfrageeinheit mit Hilfe des Prüfcodes einen Fehler in der Übertragung des von dem kontaktlosen Etikett ausgesandten Speicherworts detektiert.

9. Kontaktloses Etikett nach einem der Ansprüche 7 oder 8, in welchem die Inkrementationsmarke ein Rahmenende-Begrenzerfeld ist.
